# EUROPÄISCHE PATENTSCHRIFT

(11) **EP 2 922 237 B1**
(45) Veröffentlichungstag und Bekanntmachung des Hinweises auf die Patenterteilung: **17.02.2021**
(21) Anmeldenummer: 15000584.1
(22) Anmeldetag: 02.03.2015
(51) Int. Cl.: H04L 12/18

(54) **Verfahren, Vorrichtung und System zur Steuerung einer Konferenz**
Method, device and system for controlling a conference
Procédé, dispositif et système de commande d'une conférence

(30) Priorität: 20.03.2014 DE 102014004071
(43) Veröffentlichungstag der Anmeldung: 23.09.2015
(73) Patentinhaber: Unify GmbH & Co. KG, 81739 München (DE)
(72) Erfinder: Kleiner, Patrick, 81476 München (DE); Klug, Karl, 83714 Miesbach (DE); Unterstaller, Martha, 81477 München (DE); Stephan, Luzia, 85232 Bergkirchen (DE)
(74) Vertreter: Fritzsche, Thomas

(56) Entgegenhaltungen:
- EP-A1- 2 352 290
- US-A1- 2004 162 062
- US-A1- 2009 264 114
- US-A1- 2014 047 487
- US-A1- 2014 050 454

## Beschreibung

Die Erfindung betrifft ein Verfahren, eine Vorrichtung und ein System zur Steuerung einer Konferenz.

Konferenzen gewinnen im betrieblichen Umfeld heutzutage immer mehr an Bedeutung. Oft ist es schwer, vorbereitete Konferenzräume zu buchen, und häufig finden sie auf der Welt in verschiedenen Lokationen statt. Für Gesprächspartner, die zusammen in einem Raum sitzen, ist oft das erforderliche akustische und visuelle Equipment physikalisch nicht im Raum vorhanden oder nur teilweise oder in unzureichender Funktionalität, wie z. B. nur ein Fernseher ohne Kamera und/oder ein Mono-Desktop-Telefon, aber keine zusätzlichen Lautsprecher. Es ist bekannt, dass stereofone Klangwiedergabe die Verständlichkeit und Akzeptanz einer Konferenz deutlich erhöht. Auch kommt es vor, dass eine Kamera schlecht platziert ist oder deren Steuerungsmöglichkeiten unbefriedigend sind, sodass der Raum unzureichend ausgeleuchtet wird und/oder einzelne Konferenzteilnehmer nicht oder nicht gut erfasst werden. Unter den beschriebenen Voraussetzungen leidet auch die Produktivität der Konferenz. Ferner wollen entfernte Teilnehmer, die nicht im Konferenzraum zugegen sind, sondern alleine am eigenen Arbeitsplatz oder im Home Office sitzen oder die mobil unterwegs sind und der Konferenz zugeschaltet sind, wissen, wer an der Konferenz teilnimmt. Heute wird das durch eine kurze Einführung und die verbale Vorstellung der Teilnehmer im Konferenzraum abgewickelt. Man muss sich die Teilnehmer händisch notieren, um die Information präsent zu haben. Im Falle einer Videokonferenz kann man manchmal nur einen Ausschnitt der Beteiligten sehen, so dass die Information nicht für alle Teilnehmer in der Konferenz gleichermaßen vorhanden ist. Teilnehmer, die einzeln teilnehmen und nicht im Konferenzraum sitzen, wählen sich über eine Einwahlnummer ein.

Aus US 2013/106976 A1 ist ein Videokonferenzsystem mit einer Konferenzeinheit bekannt, welche mobile Endgeräte in einem Konferenzraum als Peripheriegeräte in der Weise nutzt, dass sie die durch Mikrofone und/oder Kameras der mobilen Endgeräte aufgenommenen Ton- und Bildsignale empfängt. Dabei wird das jeweils lauteste Tonsignal an einen entfernten Teilnehmer gesendet. Die Konferenzeinheit bzw. die Konferenz ist durch die mobilen Endgeräte steuerbar. Zur Vermeidung akustischer Kopplungen zwischen den Mikrofonen der mobilen Endgeräte und der Lautsprechereinheit des Konferenzsystems wird ein Echo-Canceller eingesetzt. Sofern die Konferenz ursprünglich über das mobile Endgerät initiiert war, kann der Teilnehmer danach die Konferenz an die Konferenzeinheit im Konferenzraum übergeben. Nach Übergabe der Konferenz an die Konferenzeinheit werden die Sprachausgabe und Videoausgabe auf die Lautsprecher und Displays der Konferenzeinheit geschaltet.

US 2009/264114 A1 offenbart ein Verfahren zur Verbesserung von Audiosignalen in einem verteilten Netzwerk unter Verwendung von räumlicher Information. Hierzu empfängt ein Prozessor Repräsentationen von einer Vielzahl von Audiosignalen, welche zumindest ein Audiosignal von einer ersten Vorrichtung und zumindest ein Audiosignal von einer zweiten Vorrichtung umfassen, welche Teil eines gemeinsamen akustischen Raumes sind. Der Prozessor kombiniert die ersten und zweiten Audiosignale zu einem Kompositaudiosignal und stellt das Kompositaudiosignal dann zusammen mit der räumlichen Information bezüglich einer Schallquelle einer weiteren Vorrichtung bereit.

US 2004/162062 A1 offenbart ein Verfahren zum Bereitstellen eines Karaoke-Services an mobilen Endgeräten unter Verwendung einer drahtlosen Verbindung zwischen den mobilen Endgeräten, wobei auf der Basis eines Abspielbefehls alle mobilen Endgeräte starten, Karaokemusik gemäß den Serviceinhalten synchron abzuspielen.

EP 2 352 290 A1 offenbart ein Verfahren zum Abgleichen von Audio- und Videosignalen während einer Videokonferenz.

US2014047487 offenbart eine Gerätesteuerung mit einer dynamischen Erkennungsprozedur, um Medienausgabegeräte zu erkennen, die sich derzeit in der Nähe eines Benutzers befinden. Die Gerätesteuerung bestimmt eine erste Teilmenge der erkannten Medienausgabegeräte, die so konfiguriert sind, dass sie dem Benutzer einen ersten Medientyp (z. B. Video, Audio usw.) präsentieren, und eine zweite Teilmenge der erkannten Medienausgabegeräte, die so konfiguriert sind, dass sie einen zweiten Medientyp präsentieren (z. B. Audio, Video usw.) an den Benutzer. Die erste und / oder die zweite Teilmenge kann zwei oder mehr Geräte enthalten, so dass der gleiche Medientyp von mehreren Geräten präsentiert werden kann, z. B. um einen Surround-Sound - Effekt, einen Split-Screen - oder dergleichen zu erhalten. Es ist eine Aufgabe der vorliegenden Erfindung, ein Verfahren und eine Vorrichtung zur Steuerung in Konferenzen anzugeben, das in der Lage ist, die vorstehenden Nachteile im Stand der Technik wenigstens teilweise zu überwinden. Insbesondere besteht eine Aufgabe der vorliegenden Erfindung darin, ein Verfahren und eine Vorrichtung zur Steuerung einer Telekonferenz anzugeben, das in der Lage ist, die akustische Wiedergabe, insbesondere Sprachverständlichkeit, in einer Telekonferenz zu verbessern, um auch die Effizienz und Produktivität der Konferenz zu steigern. Eine weitere Aufgabe der Erfindung besteht darin, eine Authentifizierung von Gerät und Benutzer, sowie deren eindeutige Zuordnung zu ermöglichen bzw. zu erleichtern und einen kontrollierten Zugriff auf Ressourcen innerhalb und außerhalb des Konferenzraumes, auch für Gast-Geräte, zu gewährleisten.

Die Aufgabe wird erfindungsgemäß wenigstens in Teilaspekten durch die Merkmale der unabhängigen Ansprüche gelöst. Vorteilhafte Ausführungsformen und Weiterentwicklungen der Erfindung sind in den Unteransprüchen angegeben.

Unter einer Telekonferenz wird im Sinne der Erfindung eine Konferenz verstanden, bei der sich mindestens ein Teilnehmer nicht in der Konferenzumgebung befindet. Insbesondere ist damit eine Videokonferenz umfasst. Dabei ist eine Konferenzumgebung als ein vorgegebenes Raumvolumen, das als der Konferenz zugehörig definiert ist, beispielsweise ein Raum oder ein definierter Umkreis um eine Konferenzeinheit, zu verstehen. Ein mobiles Endgerät ist im Sinne der Erfindung ein Endgerät, insbesondere zur Telekommunikation fähiges Endgerät, das zur Mitführung durch eine Person vorgesehen ist, wie etwa ein Smartphone, Laptop, Pad oder dergleichen, im Verlauf der Anmeldung auch als Smart Device bezeichnet. Unter einem Anmelden wird im Sinne der Erfindung ein Erkennen, ggf. Authentifizieren und protokollmäßiges Koppeln (Pairing) mit einer Konferenzinstanz, insbesondere einer lokalen Instanz in der Konferenzumgebung, sodass eine Datenverbindung besteht, verstanden. Die Verbindung kann über eine beliebige Schnittstelle (USB, Ethernet, Infrarot, FireWire, WLAN, ...) hergestellt werden. Der Anmeldevorgang kann von dem Endgerät oder von der Konferenzeinheit ausgehen, im letzteren Fall kann der Anmeldeschritt einen automatischen Erkennungsschritt umfassen oder voraussetzen. Akustische Konferenzinformation ist im Sinne der Erfindung jedweder Klang, ob Sprache, Umgebungsgeräusch, zugeschaltete Audio-Streams etc., die von einer Konferenzeinheit für die Konferenzteilnehmer aufbereitet und bereitgestellt werden. Durch die Wiedergabe der akustischen Konferenzinformation insbesondere von entfernten Konferenzteilnehmern, die sich nicht in der Konferenzumgebung befinden, in der ein Raumklang durch Kombination der angemeldeten mobilen Endgeräte als ein Audiosystem ausgegeben wird, im Sinne eines Raumklangverfahrens wird ein Raumklang für alle im Raum befindlichen Teilnehmer geschaffen. Der Eindruck des Raumklangs ist für einen Konferenzteilnehmer im Raum, also einer gegebenen Konferenzumgebung, umso realistischer, je näher sich der Konferenzteilnehmer an der Position im Raum befindet, auf die der Raumklang hinsichtlich seiner Kalibrierung ausgerichtet und berechnet ist. Diese Kalibrierungsposition kann fix, z.B. im Raumzentrum angeordnet sein, oft definiert durch eine auf einem Tisch aufgebaute Konferenzeinheit, oder der Position im Raum eines jeweils sprechenden Konferenzteilnehmer zugeordnet sein. Die Position des sprechenden Teilnehmers der Konferenz lässt sich beispielsweise aus akustischer Triangulation von an unterschiedlichen mobilen Endgeräten empfangenen Sprachsignalen des sprechenden Konferenzteilnehmers, über eine Auswertung eines oder mehrerer Kamerabilder der Konferenzumgebung des sprechenden Konferenzteilnehmers, Ortung z.B. über GPS, Bluetooth und/oder WLAN des mobilen Endgerätes des sprechenden Teilnehmers oder einer Kombination dieser Verfahren erreichen. In ähnlicher Weise, in der Lautsprecher der mobilen Endgeräte der Konferenzteilnehmer einer gegebenen Konferenzumgebung zu einem Raumklang-Audiosystem zur Ausgabe von Konferenzinformation entfernter Konferenzteilnehmer zusammengeschaltet werden, ist vorgesehen, alternativ oder zusätzlich an den mobilen Endgeräten vorhandene Mikrofone zu einem 3D-Mikrofonfeld derart zusammenzuschalten, dass für von der Konferenzumgebung entfernt platzierte Konferenzteilnehmer einer anderen Konferenzumgebung ein Raumklang der von den Mikrofonen empfangenen Konferenzinformation bereitgestellt werden kann. Bei gegebenen Mikrofonsignalen aus einer Konferenzumgebung kann aus diesen Signalen ein Raumklang in einer anderen Konferenzumgebung erzeugt werden, der u.a. davon abhängt, wieviele und welche mobilen Endgeräte in der anderen Konferenzumgebung zur Verfügung stehen und ob die Kalibrierungsposition in der anderen Konferenzumgebung fixiert ist oder örtlich variable ist. Das Verfahren wird insbesondere durch eine Konferenzeinheit, einen Konferenzserver oder ein Zusatzgerät zur Mediensteuerung (LMC - Local Media Control Unit) ausgeführt. Abhängig von der zur Verfügung stehenden Rechenleistung der LMC und der Nähe der angemeldeten mobilen Endgeräte zueinander können einzelne oder mehrere mobile Endgeräte bei der Erzeugung des Raumklangs und/oder des 3D-Mikrofonfeldes hinsichtlich der Einbeziehung der Ressourcen dieser einzelnen oder mehreren mobile Endgeräte ausgeschlossen sein. Falls beispielsweise zwei mobile Endgeräte unmittelbar nebeneinander angeordnet sind, kann der Lautsprecher eines der beiden dieser Endgeräte von der LCI "ignoriert" oder lediglich als Backup-Lösung im Fall des Ausfallens des Lautsprechers des anderen Endgeräts verwendet werden. Auch können im Fall eines Anrufs auf einem mobilen Endgerät dessen Ressourcen von der LCI freigegeben werden und auf das nächstgelegene andere mobile Endgerät durch Nutzung von dessen Ressourcen verlagert werden. Die Freigabe/Umverteilung kann erfolgen, sobald sich ein mobiles Endgerät innerhalb einer Kugel mit Radius R eines anderen mobilen Endgeräts befindet, das im Mittelpunkt der Kugel angeordnet ist. R kann 10 cm, 20 cm, 30 cm, oder 50 cm sein, wobei bei höherer Dichte an mobilen Endgeräten R kleiner gewählt wird als bei niedriger Dichte an mobilen Endgeräten. Die Einstellung von R kann kontinuierlich, in zeitlichen Intervallen, bei Verlassen/Hinzutreten eines Teilnehmers der Konferenz in die Konferenzumgebung und/oder lediglich zu Beginn einer Konferenz erfolgen Eine Positionierung der mobilen Endgeräte kann zur Berechnung des Raumklangs und/oder des 3D-Mikrofonfeldes kontinuierlich oder in vorgegebenen Intervallen nachgeführt werden. Mit dem erfindungsgemäßen Verfahren können akustische Informationen auch in minimal ausgestatteten Konferenzräumen mit erhöhter Wiedergabequalität für die anwesenden Teilnehmer der Konferenz wiedergegeben werden, da die Ressourcen der anwesenden mobilen Endgeräte zur akustischen Ausgabe (mit-) genutzt werden.

In einer Weiterbildung des erfindungsgemäßen Verfahrens umfasst das Anmelden ein Authentifizieren des mobilen Endgeräts, wobei das Authentifizieren vorzugsweise wenigstens eine von Maßnahmen umfasst, die aus der Gruppe ausgewählt sind, welche aufweist:
- Verifizieren eines durch das mobile Endgerät aufgenommenen und übermittelten Identifizierungscodes, insbesondere Strich- oder Matrixcodes;
- Abgleichen von Individualdaten, insbesondere im Rahmen einer Bild- und/oder Spracherkennung, Eingabe von Benutzerkennung und/oder Passwort und/oder PIN, einer RFID-Erkennung, eines NFC-Datenaustauschs, einer Erkennung biometrischer Daten, vorzugsweise in Interaktion mit dem mobilen Endgerät;
- Verifizieren einer im Endgerät gespeicherten und durch das Endgerät übermittelten temporären Gastlizenz;
- Aktivieren eines im Endgerät hinterlegten und durch das Endgerät übermittelten permanenten Autorisierungsprofils.

Eine Gastlizenz oder ein Autorisierungsprofil ist ein individueller Autorisierungscode, der von einem Konferenzmoderator vergeben, per E-Mail oder SMS empfangen werden kann oder dergleichen. Der Identifizierungscode kann im Raum oder an einem das Verfahren ausführenden Gerät angebracht sein oder vom Konferenzleiter zur Verfügung gestellt werden. Die Übertragung erfolgt von dem mobilen Endgerät zu einer lokalen Instanz. Diese Weiterbildung stellt sicher, dass nur authentifizierte Endgeräte angesprochen werden können, eine ungewollte Verwendung wird vermieden. Es sind mehrere Sicherheitsstufen möglich. Durch eine hochwertige Authentifizierungsprozedur können nützliche Informationen entstehen, die die Konferenz anreichern und jedem Teilnehmer zur Verfügung gestellt werden können.

In einer Weiterbildung des erfindungsgemäßen Verfahrens wird den mobilen Endgeräten nach Authentifizierung ein Zugriff auf Ressourcen innerhalb der Konferenzumgebung ermöglicht. Ressourcen können dabei beispielsweise auch Bildinformationen von Kameras oder Daten aus dem Speicher der mobilen Endgeräte sein, soweit vom Besitzer freigegeben, sowie vom Konferenzsystem bzw. Backend bereitgehaltene Inhalte. Im Rahmen dieser Weiterbildung können nützliche Informationen ausgetauscht werden, und die Konferenz kann dadurch angereichert werden.

In einer Weiterbildung des erfindungsgemäßen Verfahrens wird der Zugriff am Ende der Konferenz oder bei Verlassen der Konferenzumgebung automatisch entzogen. Dadurch bleiben die virtuellen Konferenzräume sicher und abgeschottet, Zugriff erfolgt nur bei konkreter Teilnahme an einer bestimmten Konferenz, "Mithörer" werden ausgeschlossen. Vorzugsweise wird ein Abmelden des mobilen Endgeräts am Ende der Konferenz oder bei Verlassen der Konferenzumgebung erzwungen. Besonders bevorzugt unterbleibt der Entzug des Zugriffs bei Anmeldung mit einem permanenten Autorisierungsprofil. Dadurch können beispielsweise registrierte Konferenzleiter oder Moderatoren eine Anmelde- und Autorisierungsprozedur bei jeder neuen Konferenz vermeiden.

In einer Weiterbildung des erfindungsgemäßen Verfahrens ist das Raumklangverfahren eines von Stereofonie, Quadrofonie, Mehrkanal-Kanal-Surroundklang, Spatial Audio oder dergleichen, mit oder ohne Tieffrequenzkanal. Dabei wird unter einer räumlichen Anordnung der Ort und ggf. die Ausrichtung im Raum verstanden. Gemäß dieser Weiterbildung kann ein natürliches Klangbild erzeugt werden, das auch die Ortung von Schallquellen (Sprechern) ermöglicht, insbesondere wenn entfernte Teilnehmer durch Spatial Audio oder eine ähnliche Technologie entsprechend ihren Positionen in dem auf einer Konferenzleinwand oder dergleichen dargestellten virtuellen visuellen Konferenzraum im akustischen Raum verteilt werden. Das verwendete Raumklangverfahren kann an die Anzahl mobilen Endgeräte angepasst bzw. dementsprechend ausgewählt werden.

In einer Weiterbildung des erfindungsgemäßen Verfahrens sind ferner die Schritte vorgesehen:
c) Ermitteln der räumlichen Anordnung der mobilen Endgeräte;
d) Kalibrieren der mobilen Endgeräte im Sinne des verwendeten Raumklangverfahrens.

Die Ermittlung der räumlichen Anordnung kann durch Auswertung von Bildinformationen einer Raumkamera oder -Kameraanordnung und/oder von Kameras der angemeldeten Endgeräte erfolgen. Ein Kalibrieren umfasst im Sinne der Erfindung ein Festlegen von Ausgabepegeln für jedes Endgerät, abhängig von Frequenz und (ggf.) Quelle des Signals. Das Kalibrieren umfasst vorzugsweise auch ein Senden und Empfangen von Referenztönen, insbesondere in Relation zu ggf. vorhandenen stationären Endgeräten, durch Lautsprecher und Mikrofone der jeweiligen

Endgeräte. Die Schritte c) und d) können zu Beginn der Konferenz, während der Konferenz automatisch in regelmäßigen Abständen (etwa zur Überprüfung der unveränderten räumlichen Anordnung), bei Hinzutreten oder Verlassen von Teilnehmern (d.h., Endgeräten) oder manuell ausgelöst werden. Mit dieser Weiterbildung kann eine Optimierung der Raumklanganwendung erzielt werden.

In einer Weiterbildung des erfindungsgemäßen Verfahrens werden die durch jedes mobile Endgerät zur Verfügung gestellten Ressourcen, insbesondere Vorhandensein, Art und Eigenschaften von Kameras, Lautsprechern, Mikrofonen, Monitoren, und Batterieladung des Endgeräts, ermittelt. Dadurch kann das verwendete Raumklangverfahren an die Eigenschaften der Ressourcen der mobilen Endgeräte angepasst bzw. dementsprechend ausgewählt werden. Insbesondere kann auch jede Audiokomponente individuell geprüft und ihre Position im Adiobild korrekt ausgepegelt bzw. normiert werden, sodass ein exzellentes Raumklangerlebnis bzw. ein dreidimensionales Mikrofonfeld entsteht.

In einer Weiterbildung des erfindungsgemäßen Verfahrens werden stationäre Endgeräte, soweit vorhanden, in das Verfahren eingebunden. Dadurch kann auch eine optimale Ressourcenausnutzung erzielt werden. Die Einbindung umfasst im Sinne der Erfindung Anmeldung, Kalibrierung und Ansteuern der stationären Endgeräte, wobei ohne Beschränkung der Allgemeinheit vorgesehen sein kann, dass eine räumliche Position der stationären Endgeräte im Konferenzraum vorab bekannt und gespeichert ist, wobei die Kalibrierung zusammen mit und im Verhältnis zu den mobilen Endgeräten erfolgt, wobei die akustischen Informationen im Sinne des gewählten Raumklangverfahrens optimal auf die mobilen und stationären Endgeräte verteilt werden.

Ein weiterer Gesichtspunkt der Erfindung betrifft eine Vorrichtung zur Ausführung des vorstehend beschriebenen Verfahrens, wobei die Vorrichtung insbesondere einen Konferenzserver, eine lokale Konferenzeinheit oder eine lokale Mediensteuerungseinheit umfasst, wobei die Vorrichtung vorzugsweise einen Strich- oder Matrixcode zur Verfügung stellt. Die Aufgabe der vorliegenden Erfindung wird durch diese Vorrichtung aus denselben Gründen gelöst, wie diese weiter oben für das entsprechende Verfahren angegeben wurden. Unter einem Matrixcode wird im Sinne der Erfindung ein Pixelcode (QR-Code) verstanden. Ein Matrixcode ist auch als dreidimensionale Struktur wie etwa Hologramm denkbar. Wenn die Vorrichtung einen solchen Code zur Verfügung stellt, kann dieser zur Authentifizierung der mobilen Endgeräte genutzt werden. Der Code kann durch Anbringung auf der Vorrichtung oder durch Anzeige auf einem Bildschirm oder dergleichen zur Verfügung gestellt werden. Der Code kann der Vorrichtung eigen oder für jede Konferenz neu erzeugt werden.

Ein weiterer Gesichtspunkt der Erfindung betrifft ein System zur Ausführung des vorstehend beschriebenen Verfahrens, wobei das System eine Mediensteuereinheit und wenigstens eine Backend-Einheit aufweist, wobei insbesondere Authentifizierungsschritte des Verfahrens durch Backend-Einheit ausführbar sind. Die Aufgabe der vorliegenden Erfindung wird durch dieses System aus denselben Gründen gelöst, wie diese weiter oben für das entsprechende Verfahren angegeben wurden. Eine solche Auf-/Verteilung hat den Vorteil, dass die Interaktion mit der Mediensteuerung minimal ist und dennoch ein hoher Sicherheitsstandard erreicht werden kann. Backend-Einheiten können zu einem Backend-System zusammengefasst sein, und stehen für alle Server, die beispielsweise Benutzerdaten oder Profile enthalten (etwa PKI-Schlüssel, Authentifizierungsdaten etc. Solche Server können beispielsweise in Vermittlungsanlagen integriert sein.

Das Verfahren erlaubt eine Erweiterung für Video. So kann durch eine lokale Mediensteuerung oder einen Backend-Service sichergestellt werden, dass von jedem mobilen Teilnehmer ein Bildausschnitt in eine virtuelle Konferenz eingefügt wird. Kameras als Ressource der mobilen Endgeräte können Individualbilder aufnehmen, die anstelle stationärer Kamerabilder verwendet werden. Auch können durch die Kameras der mobilen Endgeräte Bildinformationen erzeugt werden, die, ggf. zusammen mit Bildinformationen einer stationären Kamera oder Kameraanordnung, zur Berechnung einer Abbildung des Konferenzraums verwendet werden, um entfernten Teilnehmern übermittelt zu werden und dort, zusammen mit den Abbildungen anderer Konferenzräume und/oder Teilnehmer, als virtueller Konferenzraum dargestellt zu werden.

Das Verfahren erlaubt auch die Verwendung von Mikrofonen als weitere Ressource der mobilen Endgeräte. Dadurch kann beispielsweise ein jeweiliger Nahbereichsklang aufgenommen werden, der anstelle oder zusätzlich zu stationären Mikrofonen oder Mikrofonarrays verwendet und abgemischt wird.

Die Teilnehmer können durch Spatial Audio oder eine vergleichbare Technologie in einem virtuellen akustischen Raum und einem virtuellen visuellen Raum synchronisiert werden.

Weitere Merkmale, Aufgaben, Vorteile und Einzelheiten der vorliegenden Erfindung werden aus der nachstehenden Beschreibung konkreter Ausführungsbeispiele und ihrer zeichnerischen Darstellung in den beigefügten Figuren noch deutlicher werden. Es versteht sich, dass Merkmale, Aufgaben, Vorteile und Einzelheiten einzelner Ausführungsbeispiele auf andere Ausführungsbeispiele übertragbar sind und auch im Zusammenhang mit den anderen Ausführungsbeispielen als offenbart gelten sollen, soweit dies nicht aus technischen oder naturgesetzlichen Gründen offensichtlich abwegig ist. In diesem Sinne können Merkmale verschiedener Ausführungsbeispiele grundsätzlich stets miteinander kombiniert werden, und die Kombination kann ebenfalls als Ausführungsbeispiel der Erfindung verstanden werden.

Im Folgenden wird die Erfindung anhand bevorzugter Ausführungsbeispiele und mit Hilfe von Figuren näher beschrieben. Dabei ist bzw. sind
- Fig. 1: eine Darstellung eines Konferenzraums mit mehreren Teilnehmern und deren mobilen Endgeräten gemäß einem Ausführungsbeispiel der Erfindung;
- Fig. 2: eine Darstellung eines Prozesses zur Verarbeitung von Audiosignalen gemäß einem Raumklangverfahren;
- Fig. 3: eine Darstellung eines Konferenzsystems in Form eines Schaltbildes gemäß einem Ausführungsbeispiel der Erfindung;
- Fig. 4: eine Darstellung eines Ausschnitts des Konferenzsystems von Fig. 3;
- Fig. 5: ein Ablauffolge eines Prozesses zur Anmeldung eines Endgeräts gemäß einem Ausführungsbeispiel der Erfindung;
- Fig. 6: eine Darstellung eines Ausschnitts des Konferenzsystems von Fig. 3;
- Fig. 7: ein Programmschrittfolge eines Prozesses zur Kalibrierung von Endgeräten gemäß einem Ausführungsbeispiel der Erfindung;
- Fig. 8: ein Ablaufdiagramm eines Prozesses zur Konferenzsteuerung gemäß einem Ausführungsbeispiel der Erfindung;
- Fig. 9: ein Ablaufdiagramm eines Autorisierungsschritts in der Konferenzsteuerung von Fig. 8 gemäß einem Ausführungsbeispiel der Erfindung.

Die Figuren sind rein schematisch und nicht notwendigerweise maßstabsgetreu. Die zeichnerischen Darstellungen und Beschreibungen hiervon sind zur beispielhaften Veranschaulichung des Prinzips der Erfindung gedacht und sollen diese in keiner Weise einschränken.

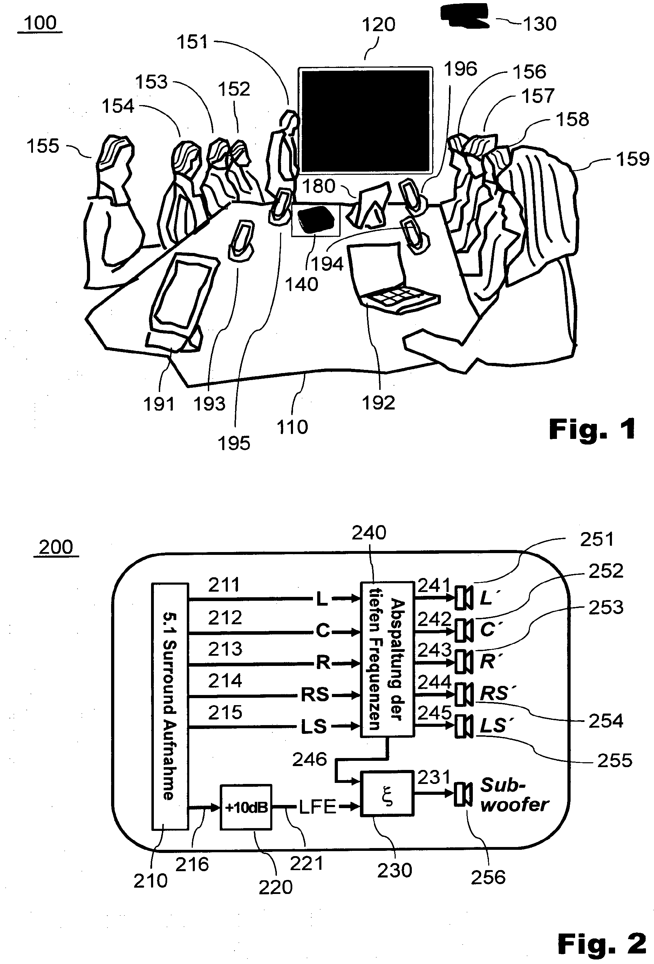

Fig. 1 zeigt einem Konferenzraum 100 gemäß einem Ausführungsbeispiel der Erfindung. Der Konferenzraum 100 verfügt als stationäre Einrichtungen über einen Konferenztisch 110, eine Großbildanzeige 130, eine Raumkamera 140, eine Lokale Mediensteuereinheit (LMC) 140 und ein stationäres Endgerät 180, das im gezeigten Beispiel ein Desktop-Computer ist. In dem Konferenzraum 100 anwesend sind Teilnehmer 151-159, wobei ein Teilnehmer 151 als Konferenzleiter fungiert. Auf dem Konferenztisch 110 sind mobile Endgeräte 191-196 platziert, die jeweils einem oder mehreren der Teilnehmer 151-159 zugeordnet sind. Die Zuordnung zu konkreten Teilnehmern selbst ist für das Verständnis der Erfindung nicht wesentlich. Es sei aber angenommen, dass der Konferenzleiter (Teilnehmer 151) Zugriff auf das stationäre Endgerät 180 hat. Es sei angenommen, dass die Endgeräte 180, 191-196 jeweils über eine Kamera, ein Mikrofon und einen Lautsprecher verfügen.

Fig. 2 zeigt eine Darstellung eines Prozesses 200 zur Verarbeitung von Audiosignalen gemäß einem an sich bekannten Raumklangverfahren mit fünf Kanälen plus Tieftonkanal (5.1 Surround).

In dem Prozess 200 liefert eine Aufnahme 210 im 5.1-Surround-Format insgesamt sechs Kanäle 211-216. Dabei seien ohne Beschränkung der Allgemeinheit ein erster Kanal 211 als linker (vorderer) Kanal L, ein zweiter Kanal 212 als mittlerer (Center-)Kanal C, ein dritter Kanal 213 als rechter (vorderer) Kanal R, ein vierter Kanal 214 als rechter rückwärtiger (Surround-)Kanal RS, ein fünfter Kanal 215 als linker rückwärtiger (Surround-)Kanal LS und ein sechster Kanal 216 als Tiefklang-(Subwoofer-)Kanal definiert. Der Tiefklangkanal 216 wird zunächst einer Anhebungsstufe 220 zugeführt, um die Signale des Tiefklangkanals 216 um +10dB anzuheben. Die Ausgangssignale der Anhebungsstufe 221, die als Tiefklangeffektsignale (Low Frequency Effects oder LFE) 221 bezeichnet werden, werden einer Addierstufe 230 zugeführt. Die Signale der anderen Kanäle 211-215 werden einer Filterstufe 240 zugeführt, in welcher tiefe Frequenzen abgespalten werden. Die übrig gebliebenen Frequenzen der Kanäle 211-215 werden Hochpassausgängen 241-245 der Filterstufe zugeführt, die abgespaltenen tiefen Frequenzen gesammelt einem Tiefpassausgang 246, der wiederum dem Addierglied 230 zugeführt wird. Die Hochpassausgänge 241-245 werden jeweiligen Breitbandlautsprechern 251-255 zugeführt, und das Summensignal 231 des Addierglieds 230 wird einem Tiefklanglautsprecher (Subwoofer oder SW) 256 zugeführt.

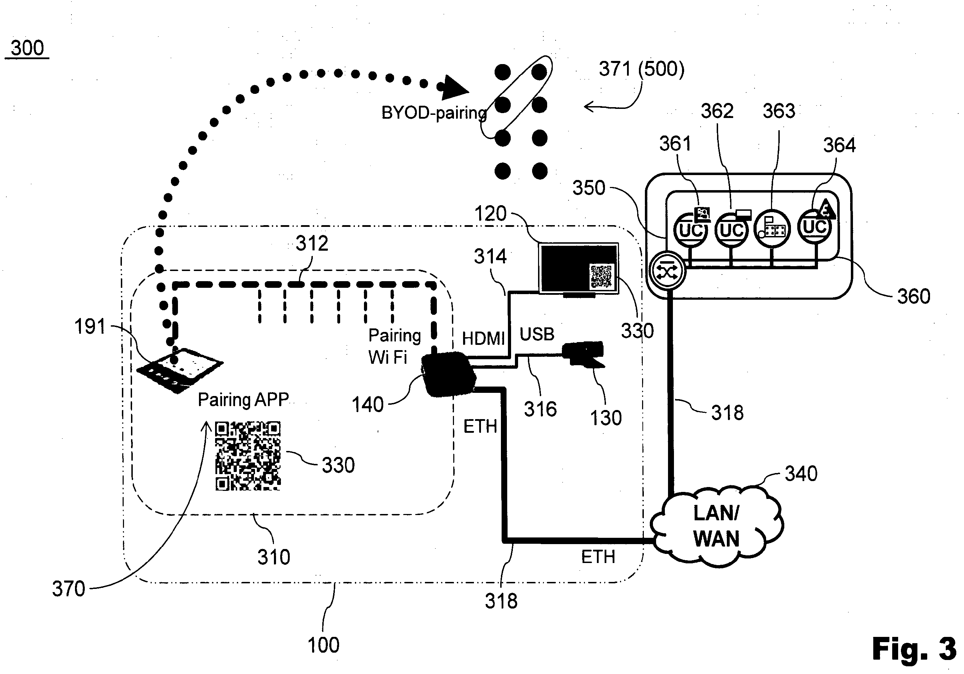

Fig. 3 zeigt ein Konferenzsystem 300 in Form eines Schaltbildes gemäß einem Ausführungsbeispiel der Erfindung.

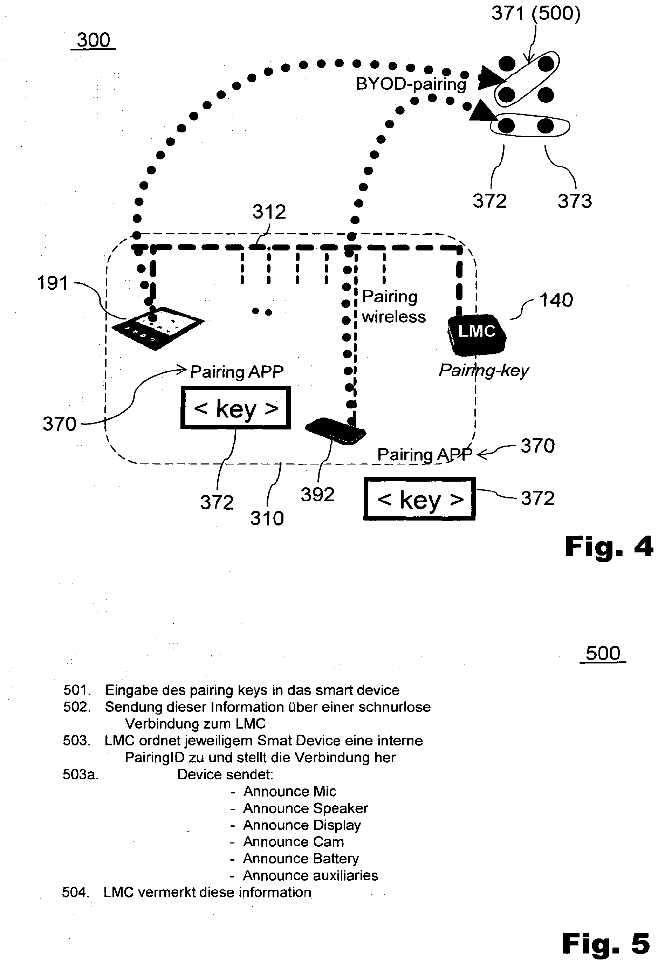

Das Konferenzsystem 300 enthält den Konferenzraum 100, von welchem die Großbildanzeige 120, die Raumkamera 130, die LMC 140 und, stellvertretend für alle anderen, das Endgerät 191 dargestellt sind. Ein lokales Funknetz (z. B. WiFi) ist mit der Bezugsziffer 310 bezeichnet. Das Endgerät 191 ist über eine WLAN-Verbindung 312, die Bestandteil des Funknetzes 312 ist, mit der LMC 140 verbunden. Die Großbildanzeige 120 ist über eine HDMI-Verbindung 314 mit der LMC 140 verbunden. Die Raumkamera 130 ist über eine USB-Verbindung 316 mit der LMC 140 verbunden. Die LMC 140 stellt einen QR-Code 330 zur Verfügung, der auf der Großbildanzeige 120 angezeigt wird. Die LMC 140 ist ferner über eine Ethernet-Verbindung 318 mit einem Firmennetz bzw. Weitbereichsnetz (LAN/WAN) 340 verbunden. Ebenso ist ein Router 350 über eine Ethernet-Verbindung 318 mit dem LAN/WAN 340 verbunden. Der Router 350 ist ferner mit einem Backend-System 360 verbunden, von dem beispielhaft ein Web-Kollaborationsdienst 361, eine UC-Applikation 362, ein Mediendienst 263 und ein OpenScape-Voice-Dienst 364 dargestellt sind. Das Endgerät 191 weist eine Pairing-Applikation 370 auf, die einen Anmeldeprozess 371 durchführt oder anstößt. Der Anmeldeprozess 371 wird als BYOD-(Bring Your Own Device)-Pairing-Prozess unter Verwendung des QR-Codes 330 durchgeführt und wird nachstehend im Zusammenhang mit Fig. 5 näher beschrieben.

Es versteht sich, dass die Art der Verbindungen 312, 314, 316, 318 nur beispielhaft dargestellt ist. Für jede Verbindung zwischen Geräten kann die geeignetste oder eine von verfügbaren Arten ausgewählt werden.

Fig. 4 zeigt eine Darstellung eines Ausschnitts des Konferenzsystems 300 von Fig. 3 zur Verdeutlichung des Anmeldeprozesses 371. Dabei ist nur das Lokale Funknetz 310 mit zwei Endgeräten 191, 192 und der LMC 140 sowie der WLAN-Verbindung 312 gezeigt.

Wie dargestellt, wird der Anmeldeprozess 371 für jedes der Endgeräte 191, 192 durchgeführt (das Gleiche gilt auch für alle anderen Endgeräte, die an der Konferenz beteiligt werden sollen). Im Zuge des BYOD-Pairing-Prozesses 371 erfolgt eine Zuordnung von Anmeldeschlüsseln (sogenannten Pairing Keys) 372 zu Anmeldeidentitäten (sogenannten Pairing IDs) 373, wie es nachstehend anhand der Darstellung in Fig. 5 genauer beschrieben wird. Die Pairing ID beschreibt das anzumeldende oder angemeldete Gerät eindeutig. Mit dem QR-Code wird der Anmeldevorgang begonnen (Einstieg in den Pairing-Vorgang).

Fig. 5 zeigt eine Ablauffolge eines Prozesses 500 zur Anmeldung eines Endgeräts gemäß einem Ausführungsbeispiel der Erfindung.

Der Prozess 500 entspricht dem Anmeldeprozess 371 in Fign. 3 und 4. In einem Schritt 501 erfolgt eine Eingabe des Anmeldeschlüssels (Pairing Keys) 372 in das Endgerät (z. B. eine Smart Device). Im nächsten Schritt 502 wird diese Information über die WLAN-Verbindung 312 an die LMC 140 gesendet. Im darauffolgenden Schritt 503 ordnet die LMC 140 dem jeweiligen Endgerät 191-197 eine interne Anmeldeidentität 373 zu und stellt die Verbindung her. Dabei sendet das jeweilige Endgerät 191-197 in Schritt 503a Informationen über seine internen Ressourcen an die LMC 140, dies sind ein Mikrofon (Mic), ein Lautsprecher (Speaker), eine Kamera (Cam), eine Batterie (Battery) bzw. ein Batterieladezustand sowie Hilfsressourcen (Auxiliaries). Im letzten Schritt 504 vermerkt die LMC 140 diese Information.

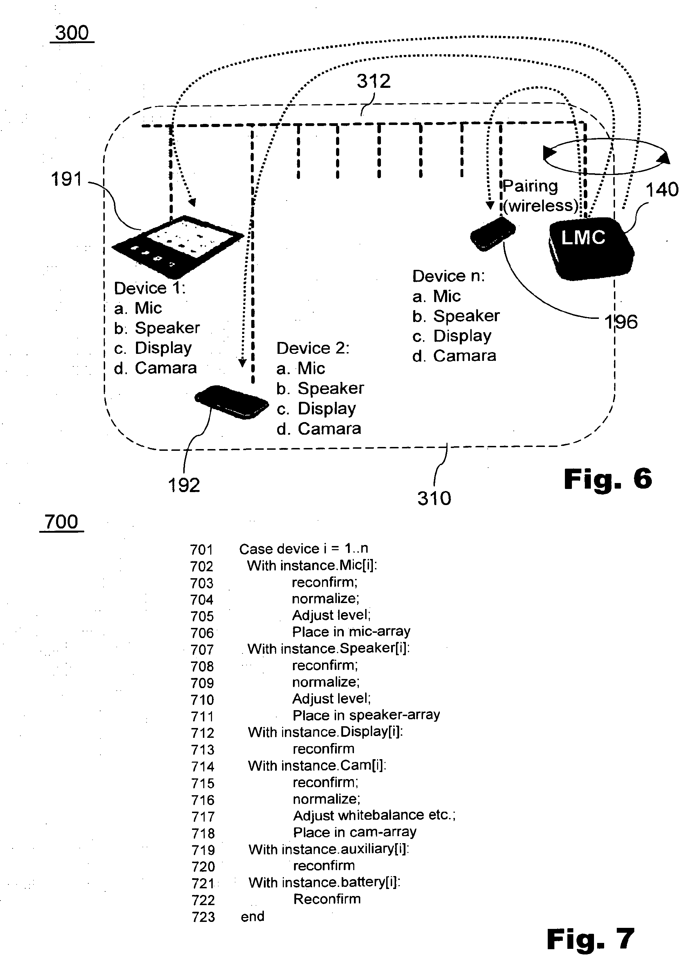

Fig. 6 zeigt einen Ausschnitt des Konferenzsystems 300 von Fig. 3 zur Veranschaulichung eines Kalibrierungsprozesses, der in Fig. 7 näher dargestellt ist. In Fig. 6 ist nur das Lokale Funknetz 310 mit drei Endgeräten 191, 192, 196 und der LMC 140 sowie der WLAN-Verbindung 312 gezeigt.

Die LMC 140 zählt intern die angemeldeten Endgeräte (engl. Device) als Device 1 bis Device n durch. Demnach wird in der LMC 140 das Endgerät 191 als Device 1, das Endgerät 192 als Device 2 und das Endgerät 196 als Device n gezählt. Gemäß der Darstellung in Fig. 6 weist jedes der mobilen Endgeräte 191-196 (Device 1 bis Device n) als Ressourcen wenigstens ein Mikrofon a, einen Lautsprecher b, eine Anzeige c und eine Kamera d auf. Es können weitere Ressourcen wie etwa Batterie oder sonstige Hilfsressourcen berücksichtigt werden. Ferner können das stationäre Endgerät 180, die Raumkamera 130 und die Großbildanzeige 120 als Endgeräte angemeldet und entsprechend eingebunden werden, sie können dabei beliebig im Bereich von Device 3 bis Device n-1 gezählt werden.

Fig. 7 zeigt eine Programmzeilenfolge eines Prozesses 700 zur Kalibrierung von Endgeräten gemäß einem Ausführungsbeispiel der Erfindung. Der Prozess 700 weist Programmzeilen 701-723 auf, die im Folgenden kurz umrissen werden und ansonsten selbsterläuternd sind.

Zeile 701 leitet eine Schleife ein, die für jedes Endgerät (Device) 1 bis n durchgeführt wird und danach in Zeile 723 verlassen wird.

Wenn sich die Schleife in einem Durchlauf für das i-te Endgerät (Device i) befindet, wird in Zeile 702 eine Befehlsfolge für das Mikrofon Mic[i] des i-ten Endgeräts eingeleitet, die von Zeile 703 bis Zeile 706 reicht. Darin wird zunächst das Mikrofon Mic[i] bestätigt (Zeile 703), wird dann eine Normalisierung (Zeile 704) und eine Pegeleinstellung (Zeile 705) vorgenommen und wird schließlich dem Mikrofon Mic[i] ein Ort in einer Mikrofonanordnung (mic-array) zugewiesen (Zeile 706).

Sodann wird in Zeile 707 eine Befehlsfolge für den Lautsprecher Speaker[i] des i-ten Endgeräts eingeleitet, die von Zeile 708 bis Zeile 711 reicht. Darin wird zunächst der Lautsprecher Speaker[i] bestätigt (Zeile 708), wird dann eine Normalisierung (Zeile 709) und eine Pegeleinstellung (Zeile 710) vorgenommen und wird schließlich dem Lautsprecher Speaker[i] ein Ort in einer Lautsprecheranordnung (speaker-array) zugewiesen (Zeile 711).

Danach wird in Zeile 712 eine Befehlsfolge für die Anzeige Display[i] des i-ten Endgeräts eingeleitet, die lediglich in Zeile 714 eine Bestätigung der Anzeige Display[i] umfasst.

Anschließend wird in Zeile 714 eine Befehlsfolge für die Kamera Cam[i] des i-ten Endgeräts eingeleitet, die von Zeile 715 bis Zeile 718 reicht. Darin wird zunächst die Kamera Cam[i] bestätigt (Zeile 715), wird dann eine Normalisierung (Zeile 716) und eine Einstellung des Weißabgleichs und andere Einstellungen (Zeile 717) vorgenommen und wird schließlich der Kamera Cam[i] ein Ort in einer Kameraanordnung (cam-array) zugewiesen (Zeile 718).

Schließlich wird in Zeile 719 eine Befehlsfolge für Hilfsressourcen Auxiliaryy[i] des i-ten Endgeräts eingeleitet, die lediglich in Zeile 720 eine Bestätigung der Hilfsressource Auxiliaryy[i] umfasst, und in Zeile 721 eine Befehlsfolge für die Batterie battery[i] des i-ten Endgeräts eingeleitet, die lediglich in Zeile 722 eine Bestätigung der Batterie battery[i] umfasst.

Die Schleife von Zeilen 702 bis 722 wird so oft durchlaufen, bis i größer als n ist, und dann mit Zeile 723 verlassen.

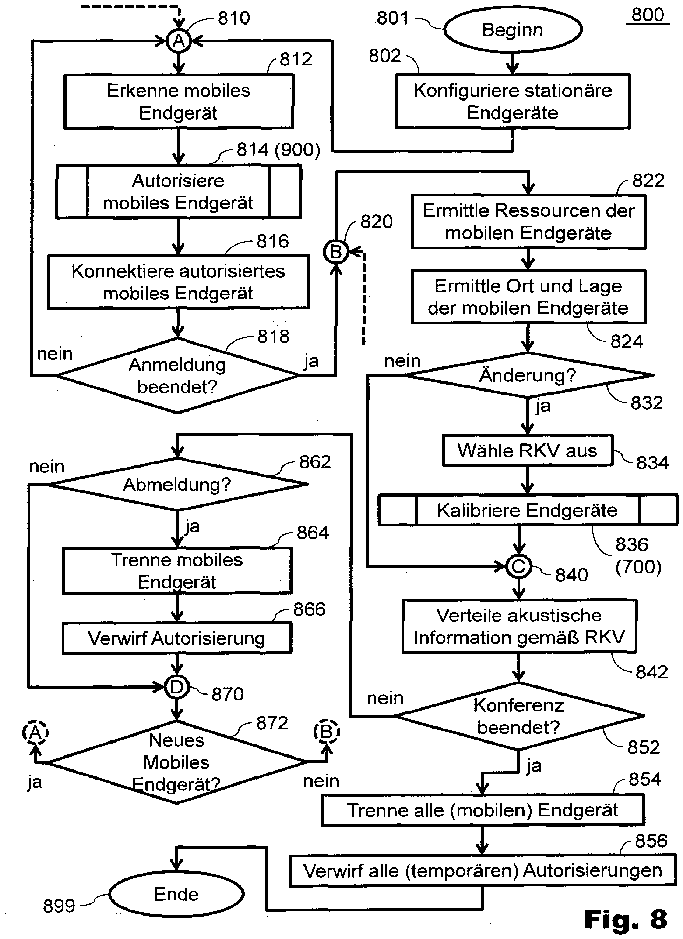

Fig. 8 zeigt ein Ablaufdiagramm eines Prozesses 800 zur Konferenzsteuerung gemäß einem Ausführungsbeispiel der Erfindung.

Nach Beginn oder Aufruf des Prozesses 800 (Schritt 801) werden zunächst die stationären Endgeräte konfiguriert (Schritt 802). Die Konfiguration der stationären Endgeräte kann eine Anmeldung, eine Bestimmung von Ort und Lage (Ausrichtung), Erkennung von Grunddaten der Ressourcen wie Mikrofon, Lautsprecher, Bildschirm etc. umfassen.

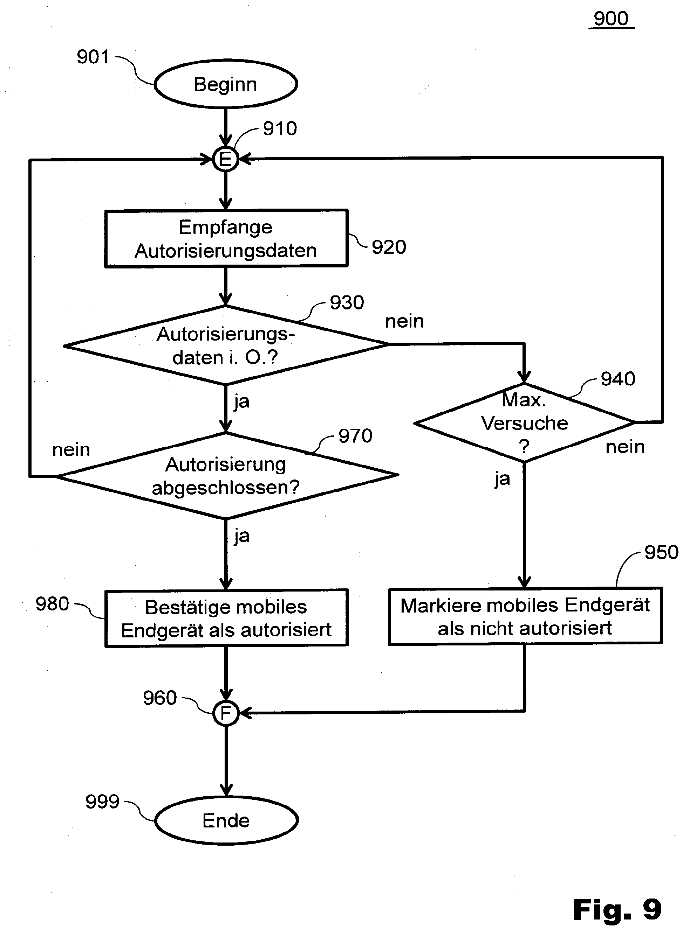

Dann läuft der Prozess über eine Vereinigungsstelle A (Schritt 810) zu Schritt 812, in welchem ein mobiles Endgerät erkannt wird, das im nachfolgenden Schritt 814 autorisiert und danach in Schritt 816 konnektiert wird. Die Autorisierung des mobilen Endgeräts 814 entspricht einem Teilprozess 900, der in Fig. 9 genauer dargestellt ist. Danach wird geprüft, ob die Anmeldung mobiler Endgeräte beendet ist oder nicht (Schritt 818). Das bedeutet, es wird geprüft, ob es noch weitere mobile Endgeräte gibt, die erkannt, die aber noch nicht autorisiert und konnektiert oder deren Autorisierung abgelehnt wurde. Solange die Antwort in Schritt 818 "nein" ist, springt die Verarbeitung zu der Vereinigungsstelle A zurück, um weitere mobile Endgeräte anzumelden. Wenn die Antwort in Schritt 818 "ja" ist, läuft der Prozess zu einer Vereinigungsstelle B (Schritt 820).

Über die Vereinigungsstelle B läuft der Prozess zu Schritt 822, in welchem Ressourcen der mobilen Endgeräte ermittelt werden. Es ist anzumerken, dass der Schritt 822 in diesem Prozess 800 dem Schritt 503a in dem in Fig. 5 gezeigten Prozess 500 entspricht. Danach werden Ort und Lage der mobilen Endgeräte ermittelt (Schritt 824). Dies kann beispielsweise über eine Auswertung der Bildinformationen der Raumkamera 130 geschehen.

Sodann wird geprüft, ob sich in Ressourcen, Ort und Lage der Endgeräte etwas geändert hat (Schritt 832). Es ist zu bemerken, dass dieser Schritt 832 im weiteren Prozessverlauf immer wieder erreicht wird, da bis zum Ende der Konferenz Ressourcen, Ort und Lage der Endgeräte immer wieder abgefragt bzw. ermittelt werden. Beim ersten Erreichen dieses Schritts 832 wird die Antwort "ja" sein, da die Endgeräte zum ersten Mal auftreten und sich die Situation gegenüber dem Beginn des Prozesses, als noch keine Endgeräte angemeldet waren, ersichtlich geändert hat. In diesem Fall ("ja" in Schritt 832) wird anhand der vorhandenen Endgeräte und Ressourcen ein geeignetes Raumklangverfahren RKV ausgewählt (Schritt 834) und die Endgeräte im Sinne des gewählten Raumklangverfahrens kalibriert (Schritt 836). Die Kalibrierung ist ein Teilprozess, der beispielsweise gemäß dem Prozess 700 in Fig. 7 entsprechen kann. Es versteht sich, dass auch im Raum bereits vorhandene, stationäre Endgeräte wie das Endgerät 180 in Fig. 1 in das Raumklangverfahren eingebunden werden können.

Danach läuft der Prozess zu einer Vereinigungsstelle C (Schritt 840). Die Vereinigungsstelle C ist auch Zielpunkt ist, wenn die Antwort in Schritt 832 "nein" lautet, d. h., sich in Ressourcen, Ort und Lage der mobilen Endgeräte keine Änderung ergeben hat. Im Anschluss an die Vereinigungsstelle C werden die akustischen Informationen der Konferenz gemäß dem gewählten Raumklangverfahren auf die Ressourcen, d.h., die Lautsprecher, der vorhandenen und angemeldeten Endgeräte verteilt (Schritt 842). Am Beispiel eines 5.1-Surround-Formats, wie es in Fig. 2 dargestellt ist, können zum Beispiel den Ressourcen im Konferenzraum 100 von Fig. 1 folgende Rollen gemäß nachstehender Tabelle 1 zugewiesen werden:

**Tabelle 1: Zuweisung von Kanälen im Surround-Format**

| **Endgerät** | **Kanal** | **Rolle** |
|---|---|---|
| Mobiles Endgerät 191 | Linker Kanal L | Lautsprecher 251 |
| Mobiles Endgerät 192 | Rechter Kanal R | Lautsprecher 253 |
| Mobiles Endgerät 193 | Linker Surround-Kanal LS | Lautsprecher 255 |
| Mobiles Endgerät 194 | Rechter Surround-Kanal RS | Lautsprecher 254 |
| Mobiles Endgerät 195 | Center-Kanal C | Lautsprecher 252 |
| Mobiles Endgerät 196 und Stationäres Endgerät 180 | Subwoofer SW | Lautsprecher 256 |

Entsprechend können Mikrofone und Kameras zugeordnet werden. So kann durch Zusammenschaltung der Ressourcen der Endgeräte auch beispielsweise ein dreidimensionales Mikrofonfeld geschaffen werden. Dies kann zu Ortung und zur räumlichen Trennung von Schallquellen im Konferenzraum 100 sowie zur Weiterverarbeitung und räumlichen Einordnung der hierdurch aufgezeichneten Schallsignale in einem virtuellen Konferenzraum, insbesondere für entfernte Teilnehmer, nützlich sein.

In vorbestimmten Zeitabständen (Interrupts) wird geprüft, ob die Konferenz, beispielsweise durch den Konferenzleiter 151 (Fig. 1) beendet wurde oder nicht (Schritt 852). Falls die Antwort in Schritt 852 "ja" ist, werden alle Endgeräte (wahlweise nur die mobilen Endgeräte) getrennt (Schritt 854) und werden alle Autorisierungen (wahlweise nur temporäre Autorisierungen) verworfen (Schritt 856), und danach endet der Prozess 800 (Schritt 899). Ist die Antwort in Schritt 852 "nein", wird weiter geprüft, ob ein mobiles Endgerät abgemeldet wurde bzw. eine Abmeldung angefordert wurde oder nicht (Schritt 862). Dies kann z. B. der Fall sein, wenn ein Teilnehmer die Konferenz vorzeitig verlässt. Falls die Antwort in Schritt 862 "ja" ist, wird das mobile Endgerät getrennt (864) und die Autorisierung verworfen (Schritt 866). Danach läuft der Prozess zu einer Vereinigungsstelle D (Schritt 870). Die Vereinigungsstelle D ist auch Zielpunkt ist, wenn die Antwort in Schritt 862 "nein" lautet, d. h., keine Abmeldung erfolgt. Schließlich wird noch geprüft, ob ein neues mobiles Endgerät hinzugekommen ist oder nicht (Schritt 872). Dadurch kann der Fall berücksichtigt werden, dass Teilnehmer später zu der Konferenz hinzutreten. Falls die Antwort in Schritt 872 "ja" ist, läuft die Verarbeitung des Prozesses zur Vereinigungsstelle A zurück (Schritt 810), um das neu hinzugekommene Endgerät anzumelden. Falls die Antwort in Schritt 872 "nein" ist, läuft die Verarbeitung des Prozesses zur Vereinigungsstelle B zurück (Schritt 820), um erneut die Ressourcen, Ort und Lage der mobilen Endgeräte zu ermitteln und auf Änderungen zu prüfen, etc.

Fig. 9 zeigt ein Ablaufdiagramm eines Teilprozesses 900, der in dem Konferenzsteuerungsprozess 800 von Fig. 8 in Schritt 814 aufgerufen wird, zur Autorisierung eines Endgeräts gemäß einem Ausführungsbeispiel der Erfindung.

Auf den Beginn bzw. Aufruf des Teilprozesses 900 (Schritt 901) folgt zunächst eine Vereinigungsstelle E (Schritt 910), die zu Schritt 920 führt. In Schritt 920 werden Autorisierungsdaten von dem zu autorisierenden Endgerät empfangen. Danach wird geprüft, ob die Autorisierungsdaten in Ordnung sind oder nicht (Schritt 930). Falls die Antwort in Schritt 930 "nein" ist, wird geprüft, ob eine vorab festgelegte Anzahl von Versuchen erreicht wurde oder nicht (Schritt 940). Falls die Antwort in Schritt 940 "nein" ist, springt die Verarbeitung zu der Vereinigungsstelle E zurück, um erneut Autorisierungsdaten zu empfangen (Schritt 920) und zu prüfen (Schritt 930). Falls die Antwort in Schritt 940 "ja" ist, wird das Endgerät als "nicht autorisiert" markiert (Schritt 950), und die Verarbeitung führt zu einer Vereinigungsstelle F (Schritt 960), woraufhin der Teilprozess 900 endet (Schritt 999).

Falls die Antwort in Schritt 930 "ja" ist, wird geprüft, ob die Autorisierung abgeschlossen ist oder nicht (Schritt 970). Damit kann eine mehrstufige Autorisierung realisiert werden. Falls die Antwort in Schritt 970 "nein" ist, springt die Verarbeitung zu der Vereinigungsstelle E zurück, um erneut Autorisierungsdaten zu empfangen und zu prüfen. Falls die Antwort in Schritt 970 "ja" ist, wird das Endgerät als "autorisiert" markiert (Schritt 980), und die Verarbeitung führt zu der Vereinigungsstelle F (Schritt 960), woraufhin der Teilprozess 900 endet (Schritt 999).

Es versteht sich, dass alle Prozesse und Teilprozesse dieser Anmeldung als Verfahren im Sinne der Erfindung zu verstehen sind. Vereinigungsstellen A, B, C, D, E, F im Prozessablauf sind virtuelle Prozessschritte, die lediglich als Sprungadresse dienen, aber sonst keine Funktion haben. Die Ausführung der Verfahren kann in der LMC 140 allein, im Dialog mit den jeweiligen Endgeräten 180, 191-196 und/oder unter Einbezug weiterer Dienste wie etwa im Backend-System 360 erfolgen.

In der vorliegenden Anmeldung wurde anhand der Fign. 1-9 ein Verfahren zur Steuerung einer Konferenz, eine Vorrichtung und ein System zur Ausführung des Verfahrens beschrieben. Die Erfindung beschreibt demnach ein Verfahren, wie vorhandene Ressourcen wie etwa Smartphones, Laptops, Smartpads etc. so miteinander kombiniert werden und gesteuert werden können, dass ein möglichst perfekter akustischer und optischer Konferenzraum entsteht. Eine lokale Mediensteuereinheit (LMC) 140 als eigenständiges Gerät im Konferenzraum 100, ausgestattet mit Standard- Schnittstellen (USB, Bluetooth, WLAN, ...), fungiert als Access-Point für die im Raum befindlichen Endgeräte wie etwa Smart-Devices (SD) 191-196. Dazu werden die Lautsprecher b, Mikrofone a und Kameras d etc. über die LMC 140 synchronisiert, kalibriert und angesteuert. Es wird ein Pairing zwischen der LMC 140 und den mobilen Endgeräten 191-196 durchgeführt, was z. B. durch die Aufnahme eines auf der LMC 140 angebrachten QR- Codes erfolgen kann. Die LMC 140 hat nach der Anmeldung bzw. nach dem Pairing mit den mobilen Endgeräten 191-196 die Information über deren Ressourcen wie Lautsprecher b, Videokamera d, Mikrofone a, Batteriestand etc., die potentielle Kandidaten für eine verbesserte Medienkontrolle darstellen. Die im Raum stationären Ressourcen 180, 130, 120 sind in der LMC 140 konfiguriert und entsprechend verdrahtet oder über Funk angebunden (z. B. Bluetooth, Wireless USB, etc.). Die Lokation (Ort und Lage) der zusätzlichen mobilen Geräte 191-196 im Konferenzraum 100 wird ermittelt. Dies kann beispielsweise durch einen Algorithmus über Senden und Empfangen von Tönen in Referenz zu den vorhandenen stationären Geräten 180, 130, 120 durchgeführt werden. Die akustische Kalibrierung erfolgt über ein Kalibrierungsverfahren für eine Stereo- oder Surround-Anordnung wie z. B. mit den 5.1-, 6.1-, 7.1-Kanal-Surround-Formaten oder dergleichen. Ähnlich können Schallquellen im Raum gemäß den Surround-Formaten erfasst werden. Diese Signale können dann einer "Spatial-Audio"-Technologie zugeführt werden, die die Aufbereitung für die nicht im Raum befindlichen Konferenzteilnehmer anbietet. Bei den Videokameras kann nun jeder mobile Teilnehmer als Bildausschnitt in die Konferenz virtuell integriert werden. Das Gesamtbild der Konferenz wird virtuell aus den verschiedenen Perspektiven zusammengesetzt.

Somit bindet die LMC 140 über ein Pairing alle vorhandenen Ressourcen ein. Insbesondere erfolgt eine Auswertung der vorhandenen Ressourcen und die akustische wie optische Kalibrierung und Einbeziehung der Ressourcen einer Video- bzw. Telekonferenz. Die LMC 140 verarbeitet für jede einzelne Ressource die Art der Ressource, den Ort der Ressource und ordnet der Ressource die Rolle im Raumklangformat (Stereo, Surround etc.) zu. Pegel und Lautstärken werden über ein Kalibrierungsverfahren am Beginn der Konferenz ausgemessen. Dabei senden die Lautsprecher und empfangen die Mikrofone das Kalibrierungssignal. Die vorhandenen Kameras liefern das jeweilige Videobild. Anhand der kontextuellen Informationen (im Backend und durch die Pairing-Information) wird über Erkennungsalgorithmen sichergestellt, dass von jedem Teilnehmer ein Videobild vorhanden ist. Ist ein solcher Teilnehmer nicht oder nur unzureichend dargestellt, erhält er einen Hinweis für eine bessere Positionierung seiner Kamera. Über einen Abgleich mit einem vorab gespeicherten Bild kann die Authentifizierung gesichert werden. Aus den Einzelbildern wird ein Gesamtvideokonferenzbild erzeugt, das jedem nicht im Raum befindlichen Konferenzteilnehmer angeboten wird.

In dem Authentifizierungsverfahren, das von der LMC 140 wenigstens teilweise durchgeführt wird, werden alle Teilnehmer registriert und Medienströme nur zu den von dem Moderator 151 freigegebenen allgemeinen Ressourcen zulässt (Beamer, Bildschirm, Freisprecheinrichtung, Mikrofone, Kameras, etc.), wenn der Moderator autorisiert ist und ebenso Medienströme nur zu den mobilen Geräten im Raum erlaubt, die sich vorher identifiziert haben und authentisiert wurden. Die LMC 140 weist eine eindeutige Identifikationsnummer auf, die von den mobilen Geräten, beispielsweise über einen QR-Code, gelesen werden kann. Die Konferenzeinheit initialisiert einen Authentifizierungsvorgang, und wenn diese abgeschlossen ist, sende die LMC 140 eine gesicherte Meldung an das Konferenzsystem mit den Daten und Zugangsberechtigungen des mobilen Geräts, als auch die Information über den zugeschalteten Konferenzteilnehmer.

Die Teilnahme von internen Teilnehmern, die im Enterprise-Netzwerk bekannt sind (also beispielsweise Mitarbeiter), kann beispielsweise wie folgt gesteuert werden. Die Konferenzeinheit sperrt im Ruhezustand alle Ressourcen, die angeschlossen sind (Beamer, Bildschirme, Mikrofone, Kameras, Telefone, Lautsprecher, etc.). Ein Nutzer im Raum kann nur dann Zugriff erhalten, wenn er sich an der LMC 140 angemeldet hat. Das Authentifizieren erfolgt in mehreren Stufen, da die LMC 140 mit den Backend-Diensten 361-364 des Backend-Systems 360 das Authentifizieren gegenprüft. Grundsätzlich muss man sich an der Konferenzeinheit und gleichzeitig (zeitlich hintereinander) an der LMC 140 authentifizieren. Der Quercheck erfolgt auf beiden Seiten (LMC und Konferenzeinheit). Die Konferenzeinheit kann im Backend angeordnet sein. Im Backend kann der gesamt Konferenzverkehr gesteuert werden, beispielsweise für den Fall, dass zwei LMCs in einen Konferenzvorgang eingebunden sind. Insofern können eine oder mehrere LMCs von der Konferenzeinheit abgegrenzt sein. Alternativ oder zusätzlich können eine oder mehrere LMCs in die Konferenzeinheit aufgenommen und/oder integriert sein. Die Authentifizierung wird letztendlich von der Konferenzeinheit vorgenommen, indem die Referenzinformation der LMC mitverwendet wird. Sollten unterschiedliche Authentifizierungsergebnisse vorliegen, wird der Zugang verweigert. Die Authentifizierung am LMC erfolgt über an sich bekannte Verfahren, wie z. B. RFID, Strichcode, QR-Tag, NFC, Biometrisch, von Hand einzugebender PIN-Code, Kamera, etc. Die Personen werden mittels der Daten der mobilen Endgeräte 191-196 und/oder der Daten, die die LMC 140 erzeugt, identifiziert (Bildmaterial der Person über die angeschlossenen Kameras, Sprache über die angeschlossenen Mikrofone, Datenaustausch mit dem mobilen Endgerät etc., erforderlichenfalls auch unter Zuhilfenahme von Backend-Diensten 361-364). Da die LMC 140 selbst an dem NAC-(Network Access Control)-System angeschlossen ist, jedoch in einem sicheren Netzsegment, während die Endpunkte in einem anderen Netzsegment angeordnet werden, ist jederzeit die Datensicherheit des sicheren Netzsegments gewährleistet. Das LMC 140 schottet entsprechend die beiden Netzsegmente ähnlich wie eine Firewall oder ein SBC (Session Border Controller) ab, wodurch auch Gastzugänge mit reduzierten Profilen möglich werden. Der Vorteil dieses Vorgehens liegt darin, dass die Benutzer-Interaktion mit der LMC 140 minimal, das Sicherheitsniveau trotzdem sehr hoch ist. Durch die Authentifizierungsprozedur entstehen sehr nützliche Informationen, die die Konferenz anreichern und jedem Konferenzteilnehmer nützliche Informationen zur Verfügung stellen. Eine weitere Besonderheit dieses Konzepts ist es, dass die Autorisierung auf die Dauer der Konferenz beschränkt wird, es sei denn, eine Permanent-Autorisierung ("privater virtueller Konferezraum") ist im Profil der LMC 140 für den spezifischen Teilnehmer hinterlegt worden (z. B. für Moderatoren, die den Raum sehr oft nutzen). Nach einer jeweiligen Konferenz wird allen vormals verbundenen Konferenzteilnehmer die Zugriffsautorisierung zu allen Raum-Ressourcen wieder entzogen.

Die Teilnahme von Teilnehmern, die einer Konferenz temporär bzw. mit Gast-Zugängen beiwohnen, kann beispielsweise wie folgt gesteuert werden. Diese können nach dem zugrundeliegenden Konzept eine temporäre Individualautorisierung zur Nutzung der über die LMC 140 verwalteten Raumressourcen erhalten. Dabei kann der Moderator bestimmten Endpunkten, etwa solchen von Gast-Teilnehmern, im Konferenzraum 100 für einen bestimmten Zeitraum oder für die Dauer der Konferenz eine Individualautorisierung gewähren. Dazu weist er dem zu autorisierenden Teilnehmer eine temporäre Gastlizenz zu, die darauf im Endgerät (Smart Device) des Gastes hinterlegt wird. Dies kann über an sich bekannte Verfahren vorgenommen werden, wie z. B. Strichcode, QR-Tag, Kamera oder PIN-Code. Die Authentifizierung selbst erfolgt danach über an sich bekannte Verfahren (RFID, Strichcode, QR-Tag, NFC, Biometrisch, von Hand einzugebender PIN-Code, Kamera, etc.) wie oben beschrieben.

Ein Vorteil der beschriebenen Steuerungsverfahren liegt in der schnellen und sicheren Korrelation der "hybriden" AAA-(Authentification Authorization Accounting)-Daten. AAA-Daten sind Daten, die sicherstellen, dass das spezifische Gerät im Netz bekannt und zugelassen ist, um einen Dienst zu nutzen, und dass die Nutzung den jeweiligen Dienst protokolliert und damit abgerechnet werden kann, wie beim Zugang eines Endgeräts zu einem Breitbandnetz. Hybride AAA-Daten sind Daten, die nicht nur klassische Authentifizierungsdaten, wie etwa PKI-Schlüssel, Passwort etc. umfassen, sondern auch bestimmte User- oder Teilnehmerprofile und/oder -historien. D. h., die hybriden AAA-Daten umfassen einerseits bereits verfügbare Teilnehmer-Credentials, die z. B. vom Backend-System 360 der Firma für alle Mitarbeiter sicher hinterlegt sind (z. B. PKI-Schlüssel oder Authentifizierungsprofile), und andererseits temporär angelegte Individualprofile, die ausschließlich lokal auf der LMC 140 temporär hinterlegt werden. Die LMC 140 stellt sicher, dass eine Gastautorisierung jederzeit auf Raumressourcen und lokal für den Besprechungsraum 100 freigegebene Entitäten begrenzt werden, während alle anderen Teilnehmer 151-159 grundsätzlich vollen Zugriff auf alle Ressourcen, auch solche auf eventuellen Backendservern, gemäß ihrem jeweiligen Autorisierungsniveau besitzen. Für alle "Nicht-Gast"-Konferenzteilnehmer kann darüber hinaus eine Permanent-Autorisierung hinterlegt werden, die allerdings an einen "privaten virtuellen Konferenzraum" und nicht an eine physikalische LMC mit jeweils verbundenen Raum-Ressourcen gebunden ist. Damit sind auch die, die nicht im jeweiligen Konferenzraum lokal vor Ort sein können, autorisiert, auf Systemressourcen im jeweiligen "fremden" Raum zuzugreifen und die entsprechende LMC zu steuern.

Wie bereits vor der detaillierten Figurenbeschreibung ausgeführt, können die unter Bezug auf die dargestellten Ausführungsformen beschriebenen Merkmale der Erfindung auch bei anderen Ausführungsformen der Erfindung vorhanden sein, außer wenn es anders angegeben ist oder sich aus technischen Gründen von selbst verbietet.

### Liste der Bezugszeichen und Symbole

- 100: Konferenzraum (Konferenzumgebung)
- 110: Konferenztisch
- 120: Großbildanzeige
- 130: Raumkamera
- 140: Lokale Mediensteuereinheit (LMC)
- 151-159: Teilnehmer
- 180: stationäres Endgerät
- 191-196: mobile Endgeräte
- 200: Klangwiedergabeprozess
- 210: Mehrkanal-Aufnahme (5.1 Surround)
- 211-216: Kanäle (L, C, R, RS, LS, SW)
- 220: Tiefanhebungsstufe
- 221: LFE-Ausgang
- 230: Addierstufe
- 231: Ausgang
- 240: Filterstufe
- 241-245: Hochpass-Ausgänge
- 246: Tiefpass-Ausgang
- 251-256: Lautsprecher (L, C, R, RS, LS, SW)
- 300: Konferenzsystem
- 310: Lokales Funknetz
- 312: WLAN-Verbindung
- 314: HDMI-Verbindung
- 316: USB-Verbindung
- 330: Identifizierungscode (QR-Code)
- 340: LAN/WAN
- 350: Router
- 360: Backend-System
- 361: Backend-Dienst: Web-Kollaboration
- 362: Backend-Dienst: UC-Apps
- 363: Backend-Dienst: Mediendienste
- 364: Backend-Dienst: OpenSpace-Sprachdienst
- 370: Pairing-Applikation
- 371: Anmeldeprozess
- 372: Anmeldeschlüssel (Pairing Key)
- 373: Anmelde-Identität (Pairing ID)
- 500: Anmeldeprozess (Pairing-Prozess)
- 501-504: Prozessschritte
- 700: Kalibrierungsprozess
- 701-723: Prozessschritte
- 800: Konferenzsteuerungsprozess
- 801-899: Prozessschritte
- 900: Authentifizierungsprozess
- 901-999: Prozessschritte

- a: Endgerät-Ressource: Mikrofon
- b: Endgerät-Ressource: Lautsprecher
- c: Endgerät-Ressource: Anzeige/Bildschirm
- d: Endgerät-Ressource: Kamera

- A: Vereinigungsstelle im Prozessablauf
- AAA: Authentifizierung, Autorisierung und Abrechnung (Authentication Authorization Accounting)
- B: Vereinigungsstelle im Prozessablauf
- BYOD: Bring-dein-eigenes-Gerät (Bring Your Own Device)
- C: Vereinigungsstelle im Prozessablauf
- C: Mitten-(Center-)Kanal
- D: Vereinigungsstelle im Prozessablauf
- E: Vereinigungsstelle im Prozessablauf
- F: Vereinigungsstelle im Prozessablauf
- L: Linker Kanal
- LAN: Nahbereichsnetz bzw. Firmennetz (Local Area Network)
- LFE: Tiefklangeffekte (Low Frequency Effects)
- LS: Linker rückwärtiger (Surround-)Kanal
- LMC: Lokale Mediensteuereinheit (Local Media Control Unit)
- NAC: Netzwerk-Zuggangssteuerung (Network Access Control)
- NFC: Nahfeldkommunikation (Near Field Communication)
- PIN: Persönliche Identifikationsnummer (Personal Identification Number)
- R: Rechter Kanal
- RFID: Funkwellen-Identifizierung (adio Frequence Identification)
- RKV: Raumklangverfahren
- RS: Rechter rückwärtiger (Surround)-Kanal
- SBC: Session Border Controller
- SD: Intelligentes Gerät (Smart Device)
- SMS: Kurznachricht(-endienst) (Short Message Service)
- SW: Tieffrequenz-Lautsprecher (Subwoofer)
- USB: Universeller Serieller Bus (Universal Serial Bus)
- WAN: Weitbereichsnetz, Internet (Wide Area Network)
- WLAN: Drahtloses LAN (Wireless LAN)

Die vorstehende Liste ist integraler Bestandteil der Beschreibung.

## Patentansprüche

1. Verfahren zur Steuerung einer Telekonferenz, bei der sich mindestens ein Teilnehmer nicht in der Konferenzumgebung befindet, mit den Schritten:
a) Anmelden mobiler Endgeräte (191-196) von Teilnehmern (151-159), die sich in einer für die Teilnehmer (151-159) gleichen Konferenzumgebung (100) befinden,
b) Ermitteln der durch jedes mobile Endgerät (191-196) zur Verfügung gestellten Ressourcen, wobei das Ermitteln ein Vorhandensein, Art und Eigenschaften von Kameras (d), Lautsprechern (b), Mikrofonen (a), Monitoren (c) und Batterieladung des mobilen Endgeräts (191-196) umfasst;
und
d) Ansteuern von Lautsprechern (b) der mobilen Endgeräte (191-196), in der Weise, dass die Lautsprecher mehrerer oder sämtlicher der angemeldeten mobilen Endgeräte (191-196) als ein Audiosystem kombiniert werden, um akustische Konferenzinformationen von dem zumindest einen entfernten Konferenzteilnehmer, der sich nicht in der Konferenzumgebung befindet, im Sinne eines Raumklangverfahrens in der Konferenzumgebung (100) auszugeben, wobei die akustischen Konferenzinformationen je nach der räumlichen Anordnung der mobilen Endgeräte (191-196) im Sinne des Raumklangverfahrens auf die Lautsprecher der mobilen Endgeräte (191-196) verteilt werden,
e) Ansteuern von Mikrofonen (a) der mobilen Endgeräte (191-196), um ein dreidimensionales Mikrofonfeld zu schaffen, so dass für den zumindest einen entfernten Konferenzteilnehmer, der sich nicht in der Konferenzumgebung befindet, ein Raumklang der von den Mikrofonen empfangenen Konferenzinformation bereitgestellt wird,
wobei das Verfahren durch eine Local Media Control Unit, LMC, ausgeführt wird, wobei in Abhängigkeit von der zur Verfügung stehenden Rechenleistung der LMC und der Nähe der angemeldeten mobilen Endgeräte zueinander einzelne oder mehrere mobile Endgeräte bei der Erzeugung des Raumklangs und/oder des 3D-Mikrofonfeldes hinsichtlich der Einbeziehung der Ressourcen dieser einzelnen oder mehreren mobile Endgeräte ausgeschlossen werden können, wobei beim Empfangen eines Anrufs auf einem mobilen Endgerät dessen Ressourcen von der LMC freigegeben werden und auf das nächstgelegene andere mobile Endgerät durch Nutzung von dessen Ressourcen verlagert werden.

2. Verfahren gemäß Anspruch 1, **dadurch gekennzeichnet, dass** das Anmelden ein Authentifizieren des mobilen Endgeräts (191-196) umfasst, wobei das Authentifizieren vorzugsweise wenigstens eine von Maßnahmen umfasst, die aus der Gruppe ausgewählt sind, welche aufweist:
- Verifizieren eines durch das mobile Endgerät (191-196) aufgenommenen und übermittelten Identifizierungscodes (330), insbesondere Strich- oder Matrixcodes;
- Abgleichen von Individualdaten, insbesondere im Rahmen einer Bild- und/oder Spracherkennung, Eingabe von Benutzerkennung und/oder Passwort und/oder PIN, einer RFID-Erkennung, eines NFC-Datenaustauschs, einer Erkennung biometrischer Daten, vorzugsweise in Interaktion mit dem mobilen Endgerät (191-196);
- Verifizieren einer im Endgerät (191-196) gespeicherten und durch das Endgerät (191-196) übermittelten temporären Gastlizenz;
- Aktivieren eines im Endgerät (191-196) hinterlegten und durch das Endgerät (191-196) übermittelten permanenten Autorisierungsprofils.

3. Verfahren gemäß Anspruch 2, **dadurch gekennzeichnet, dass** den mobilen Endgeräten (191-196) nach Authentifizierung ein Zugriff auf Ressourcen innerhalb der Konferenzumgebung (100) ermöglicht wird.

4. Verfahren gemäß Anspruch 3, **dadurch gekennzeichnet, dass** der Zugriff am Ende der Konferenz oder bei Verlassen der Konferenzumgebung (100) automatisch entzogen wird, wobei vorzugsweise ein Abmelden des mobilen Endgeräts (191-196) erzwungen wird, wobei besonders bevorzugt der Entzug des Zugriffs bei Anmeldung mit einem permanenten Autorisierungsprofil unterbleibt.

5. Verfahren gemäß einem der vorstehenden Ansprüche, **dadurch gekennzeichnet, dass** das Raumklangverfahren, eines von Stereofonie, Quadrofonie, Mehrkanal-Kanal-Surroundklang, Spatial Audio ist.

6. Verfahren gemäß Anspruch 5, weiter **gekennzeichnet durch** den Schritt:
d) Kalibrieren der mobilen Endgeräte (191-196) im Sinne des verwendeten Raumklangverfahrens, wobei das Kalibrieren vorzugsweise ein Senden und Empfangen von Referenztönen, umfasst.

7. Verfahren gemäß einem der Ansprüche 5 bis 6, **dadurch gekennzeichnet, dass** stationäre Endgeräte (180, 120, 130), soweit vorhanden, in das Verfahren eingebunden werden.

8. Vorrichtung (140) zur Steuerung einer Telekonferenz, bei der sich mindestens ein Teilnehmer nicht in der Konferenzumgebung befindet, wobei die Vorrichtung angepasst ist, um die folgenden Schritte auszuführen:
a) Anmelden mobiler Endgeräte (191-196) von Teilnehmern (151-159), die sich in einer für die Teilnehmer (151-159) gleichen Konferenzumgebung (100) befinden,
b) Ermitteln der durch jedes mobile Endgerät (191-196) zur Verfügung gestellten Ressourcen, wobei das Ermitteln ein Vorhandensein, Art und Eigenschaften von Kameras (d), Lautsprechern (b), Mikrofonen (a), Monitoren (c) und Batterieladung des mobilen Endgeräts (191-196) umfasst;
und
d) Ansteuern von Lautsprechern (b) der mobilen Endgeräte (191-196), in der Weise, dass die Lautsprecher mehrerer oder sämtlicher der angemeldeten mobilen Endgeräte (191-196) als ein Audiosystem kombiniert werden, um akustische Konferenzinformationen von dem zumindest einen entfernten Konferenzteilnehmer, der sich nicht in der Konferenzumgebung befindet, im Sinne eines Raumklangverfahrens in der Konferenzumgebung (100) auszugeben, wobei die akustischen Konferenzinformationen je nach der räumlichen Anordnung der mobilen Endgeräte (191-196) im Sinne des Raumklangverfahrens auf die Lautsprecher der mobilen Endgeräte (191-196) verteilt werden,
e) Ansteuern von Mikrofonen (a) der mobilen Endgeräte (191-196), um ein dreidimensionales Mikrofonfeld zu schaffen, so dass für den zumindest einen entfernten Konferenzteilnehmer, der sich nicht in der Konferenzumgebung befindet, ein Raumklang der von den Mikrofonen empfangenen Konferenzinformation bereitgestellt wird,
wobei die Vorrichtung eine Local Media Control Unit, LMC, ist, welche in Abhängigkeit von der zur Verfügung stehenden Rechenleistung der LMC und der Nähe der angemeldeten mobilen Endgeräte zueinander einzelne oder mehrere mobile Endgeräte bei der Erzeugung des Raumklangs und/oder des 3D-Mikrofonfeldes hinsichtlich der Einbeziehung der Ressourcen dieser einzelnen oder mehreren mobile Endgeräte ausschließen kann, wobei die LMC angepasst ist, um beim Empfangen eines Anrufs auf einem mobilen Endgerät dessen Ressourcen freizugeben und auf das nächstgelegene andere mobile Endgerät durch Nutzung von dessen Ressourcen zu verlagern.

## Claims

1. A method for controlling a teleconference, wherein at least one participant is not located in the conference environment, with the steps:
a) logging on of mobile terminals (191-196) by participants (151-159) who are in the same conference environment (100) for the participants (151-159),
b) determining the resources made available by each mobile terminal (191-196), wherein the determination comprises a presence, type and properties of cameras (d), loudspeakers (b), microphones (a), monitors (c) and battery charge of the mobile terminal (191-196);
and
d) actuating loudspeakers (b) of the mobile terminals (191-196), in such a manner that the loudspeakers of multiple or of all the logged on mobile terminals (191-196) are combined to form an audio system, in order to output acoustic conference information of the at least one remote conference participant who is not located in the conference environment, for the purpose of a surround sound procedure in the conference environment (100), wherein, depending on the spatial arrangement of the mobile terminals (191-196) for the purpose of the surround sound procedure, the acoustic conference information is distributed over the loudspeakers of the mobile terminals (191-196),
e) actuating microphones (a) of the mobile terminals (191-196), in order to create a three-dimensional microphone field, so that, for the at least one remote conference participant who is not located in the conference environment, a surround sound of the conference information received by the microphones is provided,
wherein the method is carried out by a Local Media Control Unit, LMC, wherein, depending on the available computation power of the LMC and the proximity of the logged on mobile terminals with respect to one another, individual or multiple mobile terminals, during the generation of the surround sound and/or of the 3D microphone field, can be excluded with regard to the inclusion of the resources of these individual or multiple mobile terminals, wherein, during the reception of a call on a mobile terminal, the resources thereof are released by the LMC and shifted to the closest other mobile terminal by use of the resources thereof.

2. The method according to claim 1, **characterized in that** the logging on comprises the authentication of the mobile terminal (191-196), wherein the authentication preferably comprises at least one of measures selected from the group which comprises:
- verifying an identification code (330) received and transmitted by the mobile terminal (191-196), in particular a barcode or matrix codes;
- comparing individual data, in particular in the context of an image and/or voice identification, input of user identification and/or password and/or PIN, of an RFID identification, of an NFC data exchange, of an identification of biometric data, preferably in interaction with the mobile terminal (191-196);
- verifying a temporary guest license stored in the terminal (191-196) and transmitted by the terminal (191-196);
- activating a permanent authorization profile stored in the terminal (191-196) and transmitted by the terminal (191-196).

3. The method according to claim 2, **characterized in that** access to resources within the conference environment (100) is enabled for the mobile terminals (191-196) after authentication.

4. The method according to claim 3, **characterized in that**, at the end of the conference or when leaving the conference environment (100), the access is automatically withdrawn, wherein, preferably, a logging out of the mobile terminal (191-196) is forced, wherein particularly preferably the withdrawal of the access does not occur when logging on with a permanent authorization profile.

5. The method according to any one of the preceding claims, **characterized in that** the sound surround procedure is one of stereophony, quadrophony, multichannel channel surround sound, spatial audio.

6. The method according to claim 5, further **characterized by** the step:
d) calibrating the mobile terminals (191-196) for the purpose of the surround sound procedure used, wherein the calibration preferably comprises a transmission and reception of reference tones.

7. The method according to any one of claims 5 to 6, **characterized in that** stationary terminals (180, 120, 130), to the extent present, are integrated in the method.

8. A device (140) for controlling a teleconference, in which at least one participant is not located in the conference environment, wherein the device is adjusted in order to carry out the following steps:
a) logging on of mobile terminals (191-196) by participants (151-159) who are located in the same conference environment (100) for the participants (151-159),
b) determining the resources made available by each mobile terminal (191-196), wherein the determination comprises a presence, type and properties of cameras (d), loudspeakers (b), microphones (a), monitors (c) and battery charge of the mobile terminal (191-196);
and
d) actuating loudspeakers (b) of the mobile terminals (191-196), in such a manner that the loudspeakers of multiple or of all the logged on mobile terminals (191-196) are combined to form an audio system, in order to output acoustic conference information of the at least one remote conference participant who is not located in the conference environment, for the purpose of a surround sound procedure in the conference environment (100), wherein, depending on the spatial arrangement of the mobile terminals (191-196) for the purpose of the surround sound procedure, the acoustic conference information is distributed over the loudspeakers of the mobile terminals (191-196),
e) actuating microphones (a) of the mobile terminals (191-196), in order to create a three-dimensional microphone field, so that, for the at least one remote conference participant who is not located in the conference environment, a surround sound of the conference information received by the microphones is provided,
wherein the device is a Local Media Control Unit, LMC, which, depending on the available computation power of the LMC and the proximity of the logged on mobile terminals with respect to one another, can exclude individual or multiple mobile terminals, during the generation of the surround sound and/or of the 3D microphone field, with regard to the inclusion of the resources of these individual or multiple mobile terminals, wherein the LMC, when a call is received on a mobile terminal, is adjusted in order to release the resources thereof and shift them to the closest other mobile terminal by use of the resources thereof.

## Revendications

1. Procédé de commande d'une téléconférence dans laquelle au moins un participant ne se trouve pas dans l'environnement de conférence, comportant les étapes :
a) d'identification des terminaux mobiles (191-196) des participants (151-159) qui se trouvent dans un environnement de conférence (100) identique pour les participants (151-159),
b) de détermination des ressources mises à disposition par chaque terminal mobile (191-196), dans lequel la détermination comprend la présence, le type et les propriétés des caméras (d), des haut-parleurs (b), des microphones (a), des moniteurs (c) et de la charge de la batterie du terminal mobile (191-196) ; et
d) de commande des haut-parleurs (b) des terminaux mobiles (191-196) de telle manière que les haut-parleurs de plusieurs ou de tous les terminaux mobiles identifiés (191-196) soient combinés en un seul système audio afin d'émettre des informations de conférence acoustiques par l'au moins un participant à la conférence à distance qui ne se trouve pas dans l'environnement de conférence, au sens d'un procédé de son à effet spatial dans l'environnement de conférence (100), dans lequel les informations de conférence acoustiques sont réparties en fonction de la disposition spatiale des terminaux mobiles (191-196) au sens du procédé de son à effet spatial sur les haut-parleurs des terminaux mobiles (191-196),
e) de commande des microphones (a) des terminaux mobiles (191-196) afin de créer un champ de microphone tridimensionnel, de sorte qu'un son à effet spatial des informations de conférence reçues par les microphones est fourni à l'au moins un participant à la conférence à distance qui ne se trouve pas dans l'environnement de conférence,
dans lequel le procédé peut être exécuté par une unité de commande des médias locaux, LMC, dans lequel, en fonction de la puissance de calcul disponible de la LMC et de la proximité des terminaux mobiles identifiés les uns par rapport aux autres, différents terminaux mobiles ou une pluralité d'entre eux sont exclus lors de la génération du son à effet spatial et/ou du champ de microphone 3D en ce qui concerne l'inclusion des ressources de ces différents terminaux mobiles ou de la pluralité de terminaux mobiles, dans lequel, lorsqu'un appel est reçu sur un terminal mobile, ses ressources sont débloquées par la LMC et sont relocalisées vers l'autre terminal mobile le plus proche en utilisant ses ressources.

2. Procédé selon la revendication 1, **caractérisé en ce que** l'identification comprend une authentification du terminal mobile (191-196), dans lequel l'authentification comprend de préférence au moins l'une des mesures choisies dans le groupe qui présente :
- la vérification un code d'identification (330) enregistré et transmis par le terminal mobile (191-196), en particulier des codes à barres ou matriciels ;
- la mise en correspondance des données individuelles, en particulier dans le cadre de la reconnaissance faciale et/ou vocale, la saisie de l'identifiant d'utilisateur et/ou du mot de passe et/ou du code PIN, d'une reconnaissance RFID, d'un échange de données NFC, d'une reconnaissance de données biométriques, de préférence en interaction avec le terminal mobile (191-196) ;
- la vérification d'une licence d'invité temporaire enregistrée dans le terminal (191-196) et transmise par le terminal (191-196) ;
- l'activation d'un profil d'autorisation permanente stocké dans le terminal (191-196) et transmis par le terminal (191-196) .

3. Procédé selon la revendication 2, **caractérisé en ce que** les terminaux mobiles (191-196) ont accès à des ressources dans l'environnement de conférence (100) après authentification.

4. Procédé selon la revendication 3, **caractérisé en ce que** l'accès est automatiquement retiré à la fin de la conférence ou lors de la sortie de l'environnement de conférence (100), dans lequel une déconnexion du terminal mobile (191-196) est de préférence forcée, dans lequel l'accès n'est de manière particulièrement préférée pas retiré lors de l'identification avec un profil d'autorisation permanent.

5. Procédé selon l'une des revendications précédentes, **caractérisé en ce que** le procédé de son à effet spatial est l'un de la stéréophonie, de la quadrofonie, du son surround à canaux multiples, de l'audio spatial.

6. Procédé selon la revendication 5, **caractérisé en outre par** l'étape de :
d) calibrage des terminaux mobiles (191-196) au sens du procédé de son à effet spatial utilisé, dans lequel le calibrage comprend de préférence l'envoi et la réception de tonalités de référence.

7. Procédé selon l'une des revendications 5 et 6, **caractérisé en ce que** des terminaux fixes (180, 120, 130), s'ils sont disponibles, sont intégrés dans le procédé.

8. Dispositif (140) de commande d'une téléconférence dans laquelle au moins un participant ne se trouve pas dans l'environnement de conférence, dans lequel le dispositif est adapté pour exécuter les étapes suivantes :
a) l'identification des terminaux mobiles (191-196) des participants (151-159) qui se trouvent dans un environnement de conférence (100) identique pour les participants (151-159),
b) la détermination des ressources mises à disposition par chaque terminal mobile (191-196), dans lequel la détermination comprend la présence, le type et les propriétés des caméras (d), des haut-parleurs (b), des microphones (a), des moniteurs (c) et de la charge de la batterie du terminal mobile (191-196) ; et
d) la commande des haut-parleurs (b) des terminaux mobiles (191-196) de telle manière que les haut-parleurs de plusieurs ou de tous les terminaux mobiles identifiés (191-196) soient combinés en un seul système audio afin d'émettre des informations de conférence acoustiques par l'au moins un participant à la conférence à distance qui ne se trouve pas dans l'environnement de conférence, au sens d'un procédé de son à effet spatial dans l'environnement de conférence (100), dans lequel les informations de conférence acoustiques sont réparties en fonction de la disposition spatiale des terminaux mobiles (191-196) au sens du procédé de son à effet spatial sur les haut-parleurs des terminaux mobiles (191-196),
e) la commande des microphones (a) des terminaux mobiles (191-196) afin de créer un champ de microphone tridimensionnel, de sorte qu'un son à effet spatial des informations de conférence reçues par les microphones est fourni à l'au moins un participant à la conférence à distance qui ne se trouve pas dans l'environnement de conférence,
dans lequel le dispositif est une unité de commande des médias locaux, LMC, qui peut exclure, en fonction de la puissance de calcul disponible de la LMC et de la proximité des terminaux mobiles identifiés les uns par rapport aux autres, différents terminaux mobiles ou une pluralité d'entre eux lors de la génération du son à effet spatial et/ou du champ de microphone 3D en ce qui concerne l'inclusion des ressources de ces différents terminaux mobiles ou de la pluralité de terminaux mobiles, dans lequel la LMC est adaptée pour, lorsqu'un appel est reçu sur un terminal mobile, débloquer ses ressources et les relocaliser vers l'autre terminal mobile le plus proche en utilisant ses ressources.
